# EUROPÄISCHE PATENTSCHRIFT

(11) **EP 2 534 719 B1**
(45) Veröffentlichungstag und Bekanntmachung des Hinweises auf die Patenterteilung: **25.01.2017**
(21) Anmeldenummer: 11702403.4
(22) Anmeldetag: 04.02.2011
(51) Int. Cl.: H01M 4/04, H01M 4/58, H01M 4/80, H01M 10/0525, H01M 4/587, H01M 4/136, H01M 4/1397, H01M 4/62, H01M 10/0563, H01M 4/36, H01M 4/583, H01M 4/02, H01M 10/056

(54) **WIEDERAUFLADBARE ELEKTROCHEMISCHE ZELLE**
RECHARGEABLE ELECTROCHEMICAL CELL
CELLULE ÉLECTROCHIMIQUE RECHARGEABLE

(30) Priorität: 12.02.2010 EP 10001458
(43) Veröffentlichungstag der Anmeldung: 19.12.2012
(73) Patentinhaber: Alevo International S.A., 1920 Martigny (CH)
(72) Erfinder: ZINCK, Laurent, F-76470 Mothern (FR); PSZOLLA, Christian, 76133 Karlsruhe (DE); RIPP, Christiane, 76327 Pfinztal (DE); BORCK, Markus, 70567 Stuttgart (DE); WOLLFARTH, Claudia, 76227 Karlsruhe (DE)
(74) Vertreter: Durm & Partner
(86) Internationale Anmeldenummer: PCT/EP2011/000507
(87) Internationale Veröffentlichungsnummer: WO 2011/098233

(56) Entgegenhaltungen:
- WO-A1-00/44061
- WO-A1-00/79631
- WO-A1-2008/138132
- WO-A1-2008/147751
- WO-A1-2009/077140
- WO-A2-02/103827
- DE-A1- 3 604 541
- US-A- 5 213 914
- US-A1- 2003 157 409

## Beschreibung

Die Erfindung betrifft eine wiederaufladbare Lithium-Batteriezelle mit einer positiven Elektrode, einer negativen Elektrode und einem Elektrolyten, der ein Leitsalz enthält.

Wiederaufladbare Batteriezellen sind auf vielen technischen Gebieten von großer Bedeutung. Vielfach werden sie für Anwendungen eingesetzt, bei denen nur relativ geringe Stromstärken benötigt werden, wie beispielsweise Mobiltelefone. Daneben gibt es einen großen Bedarf von Batteriezellen für Hochstromanwendungen, wobei der elektrische Antrieb von Fahrzeugen von besonderer Bedeutung ist. Die vorliegende Erfindung richtet sich insbesondere auf Zellen, die auch für Hochstromanwendungen geeignet sind.

Eine wichtige Anforderung ist eine hohe Energiedichte. Die Zelle soll möglichst viel elektrische Energie je Gewichts- und Volumeneinheit enthalten. In dieser Hinsicht ist Lithium als aktives Metall besonders vorteilhaft.

Wiederaufladbare Zellen mit hoher Energiedichte sind in der Praxis nahezu ausschließlich Lithium-Ionen-Zellen. Ihre negative Elektrode besteht aus auf Kupfer beschichtetem Kohlenstoff, in den beim Laden Lithiumionen eingelagert werden. Auch die positive Elektrode besteht aus einem Insertionsmaterial, das zur Aufnahme von Ionen des aktiven Metalls geeignet ist. In der Regel basiert die positive Elektrode auf Lithiumkobaltoxid, das auf ein Ableitelement aus Aluminium beschichtet ist. Beide Elektroden sind sehr dünn (Dicke in der Regel kleiner als 100 µm). Beim Laden werden die Ionen des aktiven Metalls aus der positiven Elektrode ausgelagert und in die negative Elektrode eingelagert. Beim Entladen läuft der umgekehrte Prozess ab. Der Transport der Ionen zwischen den Elektroden erfolgt mittels des Elektrolyts, der die erforderliche Ionenbeweglichkeit gewährleistet. Lithium-Ionen-Zellen enthalten einen Elektrolyt, der aus einem in einem organischen Lösungsmittel oder Lösungsmittelgemisch (z.B. auf Basis von Ethylencarbonat) gelösten Lithiumsalz (z.B. LiPF₆) besteht. Sie werden nachfolgend auch als "organische Lithium-Ionen-Zellen" bezeichnet.

Problematisch sind organische Lithium-Ionen-Zellen hinsichtlich der Sicherheit. Sicherheitsrisiken werden insbesondere durch den organischen Elektrolyt verursacht. Wenn eine Lithium-Ionen-Zelle Feuer fängt oder sogar explodiert, bildet das organische Lösungsmittel des Elektrolyts das brennbare Material. Um solche Risiken zu vermeiden, müssen zusätzliche Maßnahmen getroffen werden, insbesondere hinsichtlich einer sehr exakten Regelung der Lade- und Entladevorgänge und hinsichtlich zusätzlicher Sicherheitsmaßnahmen in der Batteriekonstruktion. Beispielsweise enthält die Zelle Komponenten, die im Fehlerfall schmelzen und die Batterie mit geschmolzenem Kunststoff fluten. Diese Maßnahmen führen jedoch zu erhöhten Kosten und erhöhen Volumen und Gewicht, vermindern also die Energiedichte.

Die Probleme sind besonders schwerwiegend, wenn Batteriezellen für Hochstromanwendungen entwickelt werden sollen. Die Anforderungen an die Stabilität und langfristige Betriebssicherheit sind dabei besonders hoch. Als Hochstromzellen werden hier Zellen bezeichnet, die (bei Nennspannung) eine Strombelastbarkeit, bezogen auf die Elektrodenfläche (nachfolgend "flächenspezifische Strombelastbarkeit"), von mindestens 10 mA/cm², vorzugsweise mindestens 50 mA/cm² und besonders bevorzugt mindestens 150 mA/cm² haben.

Es besteht ein hohes Bedürfnis nach verbesserten wiederaufladbaren Batteriezellen, die insbesondere folgende Anforderungen erfüllen:
- Sehr gute elektrische Leistungsdaten, insbesondere hohe Energiedichte bei gleichzeitig hohen entnehmbaren Strömen (Leistungsdichte).
- Sicherheit, auch unter den erschwerten Umweltbedingungen in einem Fahrzeug.
- Hohe Lebensdauer, insbesondere hohe Zahl nutzbarer Lade- und Entladezyklen.
- Möglichst niedriger Preis, d.h. kostengünstige Materialien und möglichst einfache Produktionsverfahren.
- Weitere für die Praxis wichtige Anforderungen wie Überladefähigkeit und Tiefentladefähigkeit.

Der Erfindung liegt das technische Problem zugrunde, eine Batteriezelle zur Verfügung zu stellen, die diese teilweise widersprüchlichen Anforderungen - insgesamt betrachtet - besser als bisher erfüllt.

Das technische Problem wird gelöst durch eine elektrochemische wiederaufladbare Lithium-Batteriezelle gemäß Anspruch 1.

Nachfolgend wird für Lithiumeisenphosphat die Kurzbezeichnung "LEP" verwendet.

Als "auf SO₂ basierender Elektrolyt" (SO₂ based electrolyte) wird im Rahmen der Erfindung ein Elektrolyt bezeichnet, der SO₂ nicht nur als Zusatz in geringer Konzentration enthält, sondern bei dem die Beweglichkeit der Ionen des Leitsalzes, das in dem Elektrolyt enthalten ist und den Ladungstransport bewirkt, zumindest teilweise durch das SO₂ gewährleistet ist. Vorzugsweise ist der Elektrolyt im Wesentlichen frei von organischen Materialien, wobei "im Wesentlichen" dahingehend zu verstehen ist, dass die Menge eventuell vorhandener organischer Materialien so gering ist, dass sie keinerlei Sicherheitsrisiko darstellen. Lithiumzellen mit einem auf SO₂ basierenden Elektrolyt werden nachfolgend als Li-SO₂-Zellen bezeichnet.

Schon seit langem werden auf SO₂ basierende Elektrolyten für Lithiumzellen diskutiert. In
(1) "Handbook of Batteries", David Linden (Editor), 2. Auflage, McGraw-Hill, 1994
   wird insbesondere auf die hohe ionische Leitfähigkeit eines auf SO₂ basierenden anorganischen Elektrolyten verwiesen. Auch hinsichtlich weiterer elektrischer Daten sei dieser Elektrolyt vorteilhaft. Systeme mit einem auf SO₂ basierenden Elektrolyten seien deshalb längere Zeit untersucht worden und für spezielle Anwendungen noch von Interesse. Die weitere kommerzielle Anwendbarkeit sei jedoch beschränkt, insbesondere weil der Elektrolyt toxisch und stark korrosiv ist.
   3. Februar 2015
   In organischen Lithium-Ionen-Zellen wird SO₂ gelegentlich als zusätzlicher Elektrolyt-Bestandteil verwendet. Beispielsweise wird in der WO 2008/147751 A1 eine elektrochemische Zelle mit einem Elektrolyt beschrieben, der als Lösungsmittel Nitrile enthält. Durch die Verwendung dieser Nitrile soll eine geringere Viskosität, ein niedriger Schmelzpunkt, eine höhere Dielektrizitätskonstante, eine hohe Oxidations-Widerstandsfähigkeit, eine hohe anodische Stabilität und eine erhöhte Lebensdauer bei hohen Temperaturen erreicht werden. Als Zusatz zur Verbesserung der Leitfähigkeit bei niedrigen Temperaturen soll bei einigen Ausführungsformen der dort beschriebenen Zelle SO₂ verwendet werden. Es wird eine Vielzahl möglicher Kathodenmaterialien, darunter auch LEP, genannt.
   Batteriezellen mit SO₂-Elektrolyten werden beispielsweise in folgenden Dokumenten beschrieben:
(2) US-Patent 5,213,914
(3) WO 00/44061 und US-Patent 6,709,789
(4) WO 00/79631 und US-Patent 6,730,441
(5) WO 2005/031908 und US 2007/0065714
(6) L. Zinck et al. "Purification process for an inorganic rechargeable lithium battery and new safety concepts", J. Appl. Electrochem., 2006, 1291-1295
(7) WO 2008/058685 und US-Patent Anmeldung 2010/0062341
(8) WO2008/147751 und WO 2009/077140
   In den Ausführungsbeispielen dieser Dokumente werden stets positive Elektroden auf Basis eines Lithiummetalloxids, insbesondere auf Basis von Lithiumkobaltoxid, eingesetzt.
   Lithiummetallphosphate sind als positives Elektrodenmaterial für Lithium-Ionen-Zellen mit organischen Elektrolyten ebenfalls seit langem bekannt. Über frühe experimentelle Untersuchungen wird berichtet in
(9) US-Patent 5,910,382
(10) Padhi et al. "Phospho-olivines as Positive-Electrode Materials for Rechargeable Lithium Batteries", J. Electrochem. Soc., 1997, 1188-1194
   In (9) und (10) werden Kathodenmaterialien für Lithiumzellen untersucht, die das Polyanion (PO₄)³⁻ enthalten. Die Untersuchung bezieht sich auf Verbindungen mit den Metallen Mn, Fe, Co und Ni, die in zwei verschiedenen Strukturen vorliegen, nämlich der Olivin-Struktur und der NASICON-Struktur. Der Einfluss der Strukturen auf die Einlagerung von Lithium wird beschrieben und es wird über Experimente mit Batteriezellen berichtet, mit denen eine geringe Anzahl von Ladezyklen (maximal 25 Zyklen) durchgeführt wurde.
   Auch auf Probleme, die mit der Verwendung von LEP-Elektroden in Lithium-Ionen-Zellen verbunden sind, wird in (9) und (10) hingewiesen. Schon für eine sehr kleine flächenspezifische Strombelastung von 0,05 mA/cm2 wird eine Zellspannung von nur 3,5 V angegeben. Im Vergleich liege die Zellspannung mit einer Lithiumkobaltoxid-Elektrode bei 4 V, also etwa 14 % höher. Außerdem ist die elektrische Leitfähigkeit des LEP sehr schlecht. Dies führt zu einer starken Abnahme der Zellspannung bereits bei relativ geringen Strombelastungen. Auch die Kapazität der Zellen ist stark von der Strombelastung abhängig und sinkt schon bei einer flächenspezifischen Strombelastung von weniger als 0,2 mA/cm² auf Werte, die die Zelle weitgehend unbrauchbar machen.
   Gemäß
(11) US-Patent 7,338,734
   sollen diese Probleme in einer Lithium-Ionen-Zelle mit organischem Elektrolyt dadurch gelöst werden, dass die spezifische Oberfläche des aktiven Materials der positiven Elektrode vergrößert wird (mit anderen Worten das Material aus sehr kleinen Partikeln besteht) und statt eines reinen Lithiumeisenphosphat ein Material verwendet wird, das mit einem der Elemente der Gruppen II A, III A, IV A, V A, VI A und III B des Periodensystems, insbesondere Niob, dotiert ist.

Damit werden im Vergleich zu den vorbekannten organischen Lithium-Ionen-Zellen mit einer positiven LEP-Elektrode wesentlich verbesserte elektrische Daten erreicht. Die Herstellung der Zellen ist jedoch sehr aufwendig, insbesondere wegen der erforderlichen Dotierung des LEP-Materials, wegen der Herstellung sehr feiner LEP-Fraktionen, wegen des Gießens dünner (folienförmiger) Elektrodenschichten und wegen der Montage der Zellen mit den dünnen Elektrodenschichten.

Im Rahmen der vorliegenden Erfindung wurde überraschenderweise festgestellt, dass sehr gute elektrische Leistungsdaten, auch für Hochstromanwendungen, auf erheblich einfachere Weise erzielt werden können, wenn man eine positive LEP-Elektrode in einer Li-SO₂-Zelle gemäß Anspruch 1 einsetzt. Dabei ist es möglich, Lithiumeisenphosphat auch ohne Dotierung zu verwenden und dennoch eine hohe Strombelastbarkeit zu gewährleisten. Es ist auch nicht notwendig, ein extrem feinkörniges LEP zu verwenden. Im Rahmen der Erfindung wird vorteilhaft ein LEP mit einer spezifischen Oberfläche, gemessen nach der Brunauer-Emmett-Teller (BET) Methode, von höchstens 40 m²/g eingesetzt, wobei auch Materialien mit höchstens 30 m²/g und sogar Materialien mit höchstens 15 m²/g vorteilhaft verwendet werden können. Die bevorzugte mittlere Teilchengröße beträgt mindestens 0,2 µm, wobei auch Materialien mit einer mittleren Teilchengröße von mindestens 0,5 µm, mindestens 1 µm oder sogar mindestens 2 µm mittlere Teilchengröße vorteilhaft verwendet werden können.

Die erfindungsgemäße positive Elektrode ist vorzugsweise porös. Bevorzugt sollte die Porosität jedoch nicht allzu hoch sein. Deshalb sind folgende Höchstwerte der Porosität in dieser Reihenfolge besonders bevorzugt: 50 %, 45 %, 40 %, 35 %, 30 %, 25 %, 20 %.

Die Poren der positiven Elektrode sind im Betrieb vorzugsweise vollständig mit Elektrolyt gefüllt. Als Leitsalze des Elektrolyts eignen sich insbesondere Aluminate, Halogenide, Oxalate, Borate, Phosphate, Arsenate und Gallate eines Alkalimetalls oder Erdalkalimetalls. Im Rahmen der Erfindung wird bevorzugt ein Lithiumtetrahalogenoaluminat, besonders bevorzugt ein Lithiumetrachloroaluminat, eingesetzt.

Der Elektrolyt enthält vorzugsweise mindestens 2,0 Mol SO₂ je Mol Leitsalz, wobei folgende Werte in dieser Reihenfolge weiter bevorzugt sind: Mindestens 2,5 Mol SO₂ je Mol Leitsalz, mindestens 3,0 Mol SO₂ je Mol Leitsalz, mindestens 4,0 Mol SO₂ je Mol Leitsalz. Im Rahmen der Erfindung wurde festgestellt, dass überraschenderweise ein Elektrolyt mit einer relativ geringen Konzentration an Leitsalz trotz des damit verbundenen höheren Dampfdrucks vorteilhaft, insbesondere hinsichtlich der Stabilität über viele Zyklen, ist.

Besondere Vorteile hat eine erfindungsgemäße Zelle, wenn die Dicke der positiven Elektrode mindestens 0,25 mm, bevorzugt mindestens 0,3 mm, weiter bevorzugt mindestens 0,4 mm, noch weiter bevorzugt mindestens 0,5 mm und besonders bevorzugt mindestens 0,6 mm beträgt. Dabei sollte auch die Menge an aktivem Material, bezogen auf die Fläche der positiven Elektrode ("Beladung") hoch sein. Bevorzugt beträgt sie mindestens 30 mg/cm², wobei folgende Werte in dieser Reihenfolge noch mehr bevorzugt sind: 40 mg/cm², 60 mg/cm², 80 mg/cm², 100 mg/cm², 120 mg/cm² und 140 mg/cm².

Mit der großen Dicke der positiven Elektrode und der entsprechend hohen Beladung mit aktivem Material sind wesentliche Vorteile verbunden. Insbesondere ist die Kapazität, bezogen auf die Fläche der positiven Elektrode ("flächenspezifische Kapazität"), sehr hoch. Die theoretische Kapazität von LEP beträgt 169 mAh/g. Bei der experimentellen Erprobung der Erfindung wurde festgestellt, dass dieser Theoriewert in einer Li-SO2-Zelle in sehr guter Nährung (mehr als 90 %) erreicht wird. Die flächenspezifische Kapazität der positiven Elektrode beträgt vorzugsweise mindestens 5 mAh/cm², wobei folgende Mindestwerte in dieser Reihenfolge noch mehr bevorzugt sind: 7,5 mAh/cm², 10 mAh/cm², 12,5 mAh/cm², 15 mAh/cm², 20 mAh/cm², 25 mAh/cm².

Im Rahmen der Erfindung wurde festgestellt, dass durch Kombination einer LEP-Elektrode und eines auf SO₂ basierenden Elektrolyten eine elektrochemische Batteriezelle hergestellt werden kann, die hinsichtlich der Gesamtheit der einleitend genannten Anforderungen wesentlich verbessert ist, wobei sie sich insbesondere für Anwendungen der Elektromobilität (beispielsweise Batterie- und Hybridfahrzeuge) eignen:
- Die hohe Beladung der positiven Elektrode und die damit verbundene hohe flächenspezifische Kapazität ermöglichen es, Zellen herzustellen, die bei hoher Gesamtkapazität eine relativ geringe Elektrodenfläche haben. Die Beladung kann deutlich über die oben genannten Mindestwerte hinausgehen und mehr als 100 mg/cm² erreichen. Für eine Kapazität von 1 Ah ist dann nur noch eine Fläche von 60 cm² erforderlich. Die benötigte Elektrodenfläche ist um einen Faktor 3 kleiner als bei für organische Lithium-Ionen-Zellen beschriebenen konventionellen LEP-Elektroden, die eine Dicke von 50 bis 90 µm und eine Flächenbeladung von 4 bis 6 mAh/cm² haben und demzufolge für die Bereitstellung einer Kapazität von 1 Ah eine Gesamtelektrodenfläche von 170 bis 250 cm² benötigen. Durch die verringerte Fläche der positiven Elektrode wird auch weniger Fläche an Separator und an negativer Elektrode benötigt. Außerdem ist, z.B. bei prismatischen Zellen mit mehreren Elektroden, eine geringere Anzahl an Ableiterfahnen zur Verbindung mit den Zellpolen erforderlich und die Verschaltung der Elektroden im Gehäuse ist bei einer geringen Elektrodenzahl wesentlich einfacher.
- Die Strombelastbarkeit ist sehr hoch. Erfindungsgemäße positive Elektroden können beispielsweise eine flächenspezifische Strombelastung von 300 mA/cm² zur Verfügung stellen.
- Die theoretische Kapazität der positiven Elektrode ist zu mindestens 90 % praktisch nutzbar. Die Lithium-Ionen können also beim Laden nahezu vollständig aus der positiven Elektrode entnommen und beim Entladen wieder in die positive Elektrode eingelagert werden. Auch hinsichtlich der Abhängigkeit der Kapazität von der Strombelastbarkeit werden erfindungsgemäß gute Werte erreicht. Mit anderen Worten steht auch bei einer hohen Strombelastung noch ein großer Teil der ursprünglichen Kapazität der Zelle zur Verfügung. Insgesamt ist - über die Lebensdauer der Zelle - die praktisch nutzbare Kapazität der erfindungsgemäßen Zelle höher als mit einer Lithiumkobaltoxid-Elektrode, obwohl die theoretische Kapazität des LEP, im Vergleich zu Lithiumkobaltoxid, nur 60 % beträgt.
- Die für Elektromobilitätsanwendungen erforderliche hohe Zahl von Lade- und Entladezyklen ist möglich. In der experimentellen Erprobung wurden mehr als 9000 Vollzyklen erreicht.
- Es ist nicht notwendig, den Elektrolyt durch Überladen der Zelle zu regenerieren, wie dies beispielsweise in dem Dokument (8) beschrieben ist. Dadurch wird die coulometrische Effektivität erhöht. Die erfindungsgemäße Zelle ist jedoch überladefähig, falls dies in einem konkreten Anwendungsfall erforderlich ist.
- Die Selbstentladung der erfindungsgemäßen Zelle ist außerordentlich gering. Sie kann deshalb in geladenem Zustand lange Zeit gelagert und ohne erneutes Aufladen sofort verwendet werden. Außerdem entfällt das mit der Selbstentladung verbundene, beispielsweise in (2) beschriebene, Sicherheitsrisiko eines "thermal runaway".
- Die Stabilität einer negativen Kohlenstoffelektrode, wie sie im Rahmen der Erfindung vorzugsweise zum Einsatz kommt, ist wesentlich verbessert. Die negative Elektrode kann sogar ohne Binder hergestellt werden.
- Es ist nicht notwendig, in dem aktiven Material der positiven Elektrode einen relativ hohen Anteil an Leitfähigkeitsverbesserer auf der Basis von Kohlenstoff einzusetzen, wie dies in den Dokumenten (9), (10) und (11) beschrieben wird. Vielmehr sind relativ geringe Mengen an Leitfähigkeitsverbesserer ausreichend. Vorzugsweise beträgt der Kohlenstoffgehalt der positiven Elektrode weniger als 10 Gew% wobei folgende Höchstwerte in dieser Reihenfolge weiter bevorzugt sind: 7 Gew%, 5 Gew%, 2 Gew%.
- Auch der Anteil an Bindemittel kann sehr niedrig sein. Vorzugsweise enthält die positive Elektrode höchstens 10 % Bindemittel, wobei folgende Werte in dieser Reihenfolge weiter bevorzugt sind: 7 Gew%, 5 Gew%, 2 Gew%.

Auf der Grundlage der vor der Erfindung vorliegenden Informationen konnte nicht erwartet werden, dass eine Li-SO₂-Zelle mit LEP als aktivem Material der positiven Elektrode funktionsfähig und sogar besonders vorteilhaft sein würde.
- Wie erwähnt liegt die Zellspannung einer Lithium-Ionen-Zelle mit LEP um fast 15 % unter der Zellspannung einer Lithium-Ionen-Zelle mit Lithiumkobaltoxid. Demzufolge war eine entsprechende Verschlechterung der Energiedichte zu erwarten.
- In den bisher publizierten Dokumenten zu Li-SO₂-Zellen wurde stets eine positive Elektrode auf Basis eines Oxids, insbesondere des Lithiumkobaltoxid, als ideal in Kombination mit dem SO₂-Elektrolyt dargestellt. Zur Verbesserung der Elektrodeneigenschaften wurde in (5) eine aktivierende Reinigung empfohlen.
- Die Elektroden stehen in der Zelle mit dem Elektrolyt in Kontakt und können deswegen primär nur mit diesem reagieren. Der Elektrolyt ist deshalb entscheidend für mögliche Reaktionen der in den Elektroden enthaltenen Materialien. Eine problematische Eigenschaft eines auf SO₂ basierenden Elektrolyten ist, wie schon in dem Dokument (1) dargelegt wird, dessen hohe Korrosivität. Aus dem chemischen Verhalten von LEP in einem organischen Elektrolyten lässt sich nichts über die Beständigkeit in einem grundlegend verschiedenen auf SO₂ basierenden anorganischen Elektrolyten ableiten. Da Lithiumkobaltoxid sich in einer Li-SO₂-Zelle bewährt hatte, wurden Alternativen allenfalls bei chemisch verwandten oxidischen Verbindungen gesucht.
- Als wichtigster Vorteil eines auf SO₂ basierenden Elektrolyten wurde dessen gute Leitfähigkeit angesehen. Andererseits war bekannt, dass LEP ein sehr schlecht leitendes Elektrodenmaterial ist. Auf dieser Grundlage schien es unlogisch, bei der Entwicklung einer auch für Hochstromanwendungen geeigneten Batteriezelle den im Hinblick auf den Innenwiderstand der Zelle vorteilhaften Elektrolyt mit einem in dieser Hinsicht offensichtlich nachteiligen Elektrodenmaterial zu kombinieren.
- Bereits in dem Dokument (1) wird darauf hingewiesen, dass die Auswahl positiver Elektrodenmaterialien für eine Li-SO₂-Zelle auf solche Verbindungen beschränkt ist, die bei Potentialen oberhalb des Reduktionspotentials von SO₂ reduziert werden. Da das Reduktionspotential von LEP mit 2,9 Volt erheblich niedriger als das von Lithiumkobaltoxid (3,5 Volt) ist, bleibt nur ein schmaler Spannungsbereich, innerhalb dessen die Zelle möglichst vollständig geladen und entladen werden soll. Bei der Erprobung des LEP in einer organischen Zelle gemäß den Dokumenten (9) und (10) wurden nur etwa 60 % des Lithium aus dem LEP extrahiert, obwohl mit einer extrem geringen flächenspezifischen Strombelastung von 50 µA/cm² geladen und entladen wurde.

Sowohl die positive Elektrode auf Basis von LEP als auch die negative Elektrode auf Basis von Kohlenstoff sind Interkalationselektroden, die das aktive Metall Lithium beim Laden bzw. Entladen in ihre Gitterstruktur aufnehmen. Auf solche Interkalationselektroden und generell auch auf andere zur Aufnahme von Lithium in ihrem Inneren geeignete Insertionselektroden bezieht sich eine bevorzugte Ausgestaltung der Erfindung, gemäß der in Batteriezellen, deren Elektrolyt auf SO₂ basiert, mindestens eine der Elektroden eine zur Aufnahme von Lithiumionen geeignete Insertionselektrode ist, welche deckschichtvermindernd vorbehandelt ist. Eine solche Ausführungsform ist für die vorstehend erläuterte wiederaufladbare Lithium-Batteriezelle mit einer positiven LEP-Elektrode vorteilhaft, hat aber auch darüber hinausgehend für alle Insertionselektroden in einem auf SO₂ basierenden Elektrolyten Bedeutung.

Die deckschichtvermindernde Vorbehandlung bezieht sich auf die Bildung von Deckschichten auf der Oberfläche von Insertionselektroden, die bei den ersten Ladezyklen entstehen. Die Deckschichtbildung verbraucht nicht nur Ladestrom, sondern führt auch zu einem irreversiblen Verbrauch von aktiven Komponenten des Batteriesystems und damit zu einer Verminderung der Kapazität während der weiteren Batterielebensdauer. Durch die deckschichtvermindernde Vorbehandlung wird der mit der Deckschichtbildung verbundene Kapazitätsverlust reduziert.

Die Erfindung wird nachfolgend anhand der Figuren näher erläutert. Die dargestellten und beschriebenen Besonderheiten können einzeln oder in Kombination verwendet werden, um bevorzugte Ausgestaltungen der Erfindung zu schaffen. Es zeigen:
- Figur 1: eine Querschnittsdarstellung einer erfindungsgemäßen Batteriezelle;
- Figur 2: eine Querschnittsdarstellung eines für die Erfindung geeigneten Metallschaums;
- Figur 3: eine Querschnittsdarstellung einer positiven Elektrode;
- Figur 4: die Abhängigkeit der Entladekapazität von der Zykelzahl bei einem mit einer positiven Elektrode durchgeführten Experiment;
- Figur 5: die Abhängigkeit der Entladekapazität von der Entladerate bei einem mit einer positiven Elektrode durchgeführten Experiment im Vergleich zu publizierten Ergebnissen;
- Figur 6: die Abhängigkeit des elektrischen Widerstandes einer Elektrode von der Zykelzahl bei einem mit einer positiven Elektrode durchgeführten Experiment;
- Figur 7: die Abhängigkeit der Kapazität von der Zykelzahl bei einem mit zwei unterschiedlichen positiven Elektroden durchgeführten Experiment;
- Figur 8: die Abhängigkeit der Kapazität von der Zykelzahl bei einem anderen mit zwei unterschiedlichen positiven Elektroden durchgeführten Experiment;
- Figur 9: die Abhängigkeit der Entladekapazität von der Zykelzahl bei einem mit zwei unterschiedlichen Zellen durchgeführten Experiment;
- Figur 10: die Abhängigkeit der Kapazität von der Zykelzahl bei einem Langzeitexperiment;
- Figur 11: die Abhängigkeit der elektrischen Spannung von der Ladekapazität für drei unterschiedlich vorbehandelte negative Elektroden.

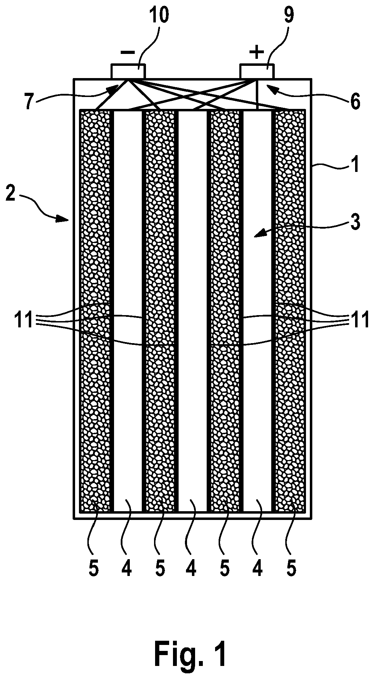

Das Gehäuse 1 der in Figur 1 dargestellten wiederaufladbaren Batteriezelle 2 umschließt eine Elektrodenanordnung 3, die mehrere (im dargestellten Fall drei) positive Elektroden 4 und mehrere (im dargestellten Fall vier) negative Elektroden 5 einschließt. Die Elektroden 4, 5 sind, wie üblich, über Elektrodenanschlüsse 6, 7 mit entsprechenden Anschlusskontakten 9, 10 der Batterie verbunden. Die Zelle ist derartig mit einem auf SO₂-basierenden in den Figuren nicht dargestellten Elektrolyt gefüllt, dass er möglichst vollständig in sämtliche Poren, insbesondere innerhalb der Elektroden 4, 5, eindringt.

Die Elektroden 4, 5 sind in üblicher Weise flächig ausgebildet, d.h. als Schichten mit einem im Verhältnis zu ihrer Flächenausdehnung geringen Dicke. Sie sind jeweils durch Separatoren 11 voneinander getrennt. Das Gehäuse 1 der dargestellten prismatischen Zelle ist im Wesentlichen quaderförmig, wobei sich die Elektroden und die im Querschnitt der Figur 1 dargestellten Wände senkrecht zu der Zeichenebene erstrecken und im Wesentlichen gerade und eben verlaufen. Die erfindungsgemäße Zelle kann jedoch auch als Wickelzelle ausgebildet sein.

Die Elektroden 4, 5 weisen, wie üblich, ein Ableitelement auf, das aus Metall besteht und dazu dient, den erforderlichen elektronisch leitenden Anschluss des aktiven Materials der jeweiligen Elektrode zu ermöglichen. Das Ableitelement steht in Kontakt zu dem an der Elektrodenreaktion der jeweiligen Elektrode beteiligten aktiven Material. Das Ableitelement der positiven Elektrode, bevorzugt auch das Ableitelement der negativen Elektrode, ist in Form einer dreidimensionalen porösen Metallstruktur, insbesondere in Form eines Metallschaums, ausgebildet. Der Begriff "dreidimensionale poröse Metallstruktur" bezeichnet dabei jede aus Metall bestehende Struktur, die sich nicht nur, wie ein dünnes Blech, über Länge und Breite der flächigen Elektrode erstreckt, sondern auch über deren Dickendimension, wobei sie derartig porös ist, dass das aktive Material der Elektrode in die Poren eingearbeitet werden kann.

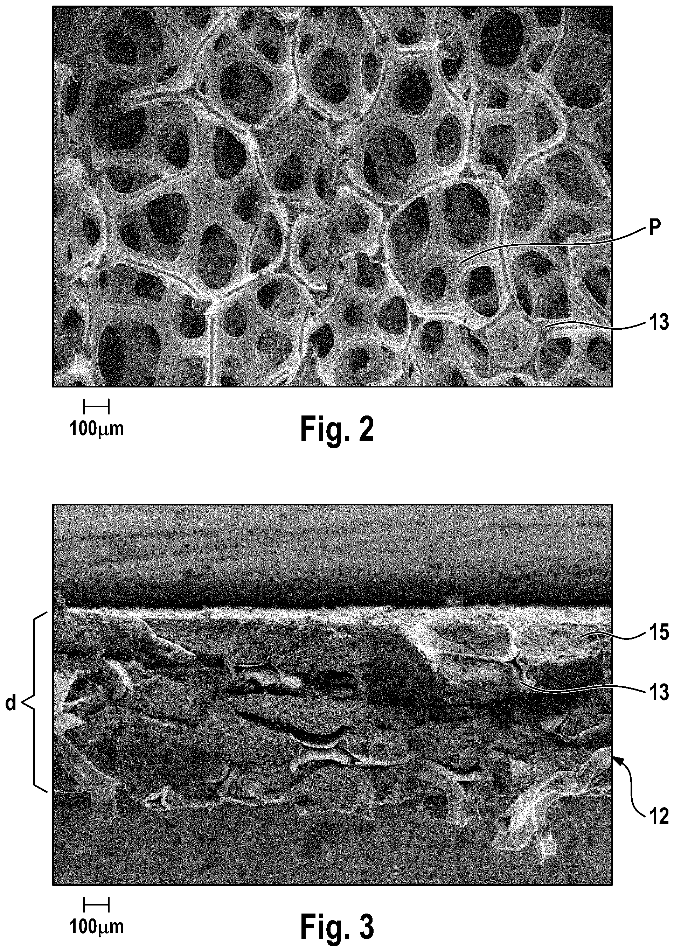

Figur 2 zeigt eine elektronenmikroskopische Aufnahme von einer Querschnittsfläche einer für die Erfindung geeigneten Metallschaumstruktur. Anhand des angegebenen Maßstabes erkennt man, dass die Poren P im Mittel mehr als 100 µm Durchmesser haben, also verhältnismäßig groß sind. Statt des Metallschaums kann auch eine andere dreidimensionale Metallstruktur, beispielsweise in Form eines Metallvlieses oder Metallgewebes, verwendet werden.

Bei der Herstellung der Elektrode wird das LEP-Material derartig in die poröse Struktur des Ableitelementes eingearbeitet, dass es dessen Poren über die gesamte Dicke der Metallstruktur gleichmäßig füllt. Danach wird das Material unter hohem Druck gepresst, wobei die Dicke nach dem Pressvorgang vorzugsweise maximal 50 %, besonders bevorzugt maximal 40 %, der Ausgangsdicke beträgt.

Die dabei resultierende Elektrodenstruktur ist in Figur 3, wiederum in Form einer elektronenmikroskopischen Aufnahme, zu erkennen. Um zu verhindern, dass die Strukturmerkmale durch einen Schnittvorgang verfälscht werden, wurde das Elektrodenmaterial in flüssigem Stickstoff gekühlt und anschließend gebrochen. Trotz gewisser durch den Bruchvorgang verursachte Materialbeschädigungen sind die wesentlichen Merkmale der Struktur einer erfindungsgemäßen positiven Elektrode in Figur 3 gut zu erkennen.

Die Elektrode ist im Vergleich zu bekannten LEP-Elektroden sehr dick. Im dargestellten Fall beträgt die Dicke d etwa 0,6 mm. Die dreidimensionale poröse Metallstruktur 13 des Ableitelementes erstreckt sich im Wesentlichen über die gesamte Dicke d des Ableitelementes und das aktive LEP-Material 15 ist darin im Wesentlichen homogen verteilt. "Im Wesentlichen" ist hinsichtlich beider genannter Bedingungen dahingehend zu verstehen, dass die Zellfunktion durch eventuelle Abweichungen nur geringfügig beeinträchtigt wird. Jedenfalls sollte sich die poröse Metallstruktur über mindestens 70 %, vorzugsweise mindestens etwa 80 %, der Dicke der Elektrode erstrecken.

Zur Verbesserung der mechanischen Festigkeit enthält die positive Elektrode ein Bindemittel. Im Rahmen der Erfindung haben sich fluorierte Bindemittel, insbesondere THV (Terpolymer aus Tetrafluorethylen, Hexafluorpropylen und Vinylidenfluorid) und PVDF (Polyvinylidenfluorid) bewährt. Vorteilhafterweise ist es ausreichend, wenn das Bindemittel in einer relativ geringen Konzentration in der Elektrode enthalten ist.

Die negative Elektrode enthält als aktives Material vorzugsweise Kohlenstoff in einer als Insertionsmaterial zur Aufnahme von Lithiumionen geeigneten Form. Die Struktur ist vorzugsweise ähnlich wie bei der positiven Elektrode mit folgenden Merkmalen:
- Auch bei der negativen Elektrode hat das Ableitelement vorzugsweise eine dreidimensionale poröse Metallstruktur, insbesondere in Form eines Metallschaums.
- Sie ist verhältnismäßig dick, wobei ihre Dicke mindestens 0,2 mm beträgt und folgende Werte in dieser Reihenfolge weiter bevorzugt sind: 0,3 mm, 0,4 mm, 0,5 mm, 0,6 mm.
- Die Menge des aktiven Materials der negativen Elektrode, bezogen auf ihre Fläche, beträgt mindestens 10 mg/cm², wobei folgende Werte in dieser Reihenfolge weiter bevorzugt sind: 20 mg/cm², 40 mg/cm², 60 mg/cm², 80 mg/cm², 100 mg/cm².
- Die flächenspezifische Kapazität beträgt vorzugsweise mindestens 2,5 mAh/cm², wobei folgende Werte in dieser Reihenfolge weiter bevorzugt sind: 5 mAh/cm², 10 mAh/cm², 15 mAh/cm², 20 mAh/cm², 25 mAh/cm², 30 mAh/cm².
- Sie ist vorzugsweise porös, wobei ihre Porosität höchstens 50 % beträgt und folgende Werte in dieser Reihenfolge weiter bevorzugt sind: 45 %, 40 %, 35 %, 30 %.
- Der Bindemittelanteil beträgt vorzugsweise höchstens 5 Gew%, weiter bevorzugt höchstens 3 Gew% und besonders bevorzugt höchstens 1 Gew%. Ganz besonders bevorzugt ist eine negative Elektrode, die kein Bindemittel enthält.

Weitere Informationen über die Erfindung und deren bevorzugte Ausgestaltungen ergeben sich aus den nachfolgend beschriebenen Experimenten.

### Experiment 1:

### Aus folgenden Komponenten

94 Gew% undotiertes Lithiumeisenphosphat mit Kohlenstoff-Oberflächenbeschichtung; mittlere Partikelgröße ca. 2 - 3 µm
2 Gew% Carbonblack als Leitfähigkeitsvermittler
4 Gew% THV als Binder
wurde eine Paste hergestellt, wobei zunächst der Binder in Aceton gelöst, danach das Carbonblack unter Rühren zu der Lösung zugegeben und schließlich die Aktivmasse im Wechsel mit weiterem Lösungsmittel ebenfalls unter Rühren hinzugefügt wurde.

Die Paste wurde homogen in einen Metallschaum mit einer Ausgangsporosität von mehr als 90 % eingebracht und eine Stunde bei 50° C getrocknet. Nach dem Abkühlen wurde das Elektrodenmaterial mittels eines Kalanders, ausgehend von einer Ausgangsdicke von 1,6 mm auf eine Dicke von 0,6 mm zusammengepresst. Danach wurde es einem Temperprozess bei 180° C unterzogen. Das resultierende Elektrodenmaterial hatte einen Querschnitt entsprechend Figur 3.

Aus dem Elektrodenmaterial wurden 1 cm² große Stücke ausgeschnitten. Sie hatten eine Kapazität von ca. 13 mAh. Sie wurden in einer E-Zelle mit Drei-Elektroden-Anordnung untersucht, wobei die Bezugs- und Gegenelektrode aus metallischem Lithium bestanden. Der in der E-Zelle verwendete Elektrolyt hatte die Zusammensetzung LiAlCl₄ * 1,5 SO₂.

Um die Entladekapazitäten der Elektroden bei unterschiedlichen Strombelastungen zu bestimmen, wurden in den E-Zellen 40 Lade- und Entladezyklen durchgeführt, wobei das Laden jeweils mit einer gleichen Laderate von 1 C ("C" gibt an, das Wievielfache der Nennkapazität innerhalb einer Stunde be- bzw. entladen wird) durchgeführt wurde. Nach jedem Ladevorgang wurde entladen, wobei die Zellen in den 40 Zyklen mit folgenden Raten entladen wurden:
10 Zyklen 1 C
je 4 Zyklen 2 C, 4 C, 8 C, 10 C, 15 C
10 Zyklen 1 C.

Die Ladung erfolgte bis zu einer Spannung von 3,7 V. Die Entladung war bei einer Spannung von 3,2 V beendet.

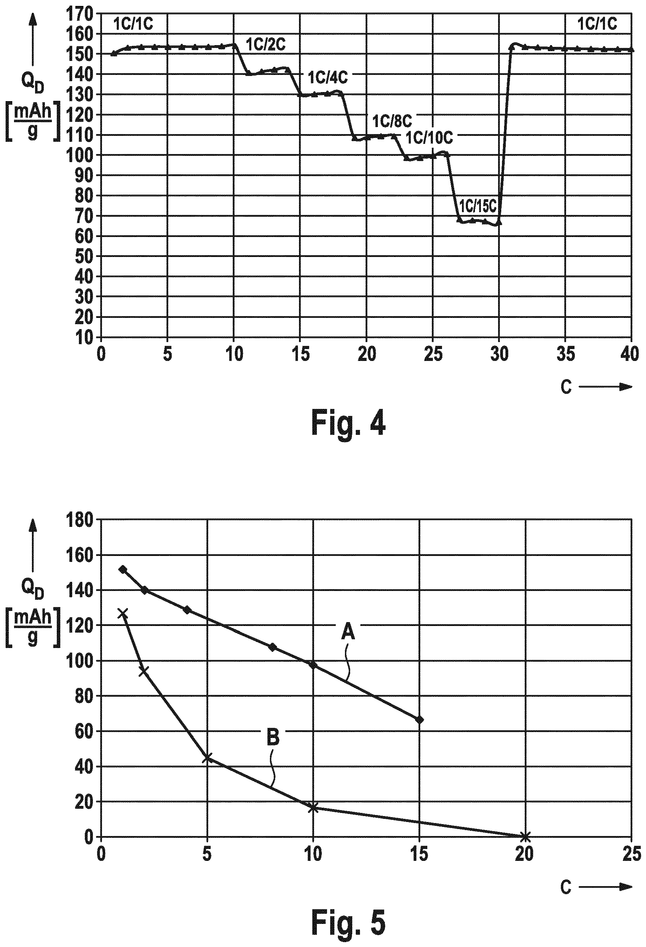

Figur 4 zeigt als Mittelwerte über acht Experimente die Abhängigkeit der Entladekapazität Q_{D} in mAh/g von der Nummer des Zyklus. Man erkennt, dass auch noch bei sehr hohen Entladeraten ein großer Teil der Nennkapazität zur Verfügung steht. Wenn beispielsweise die Zelle so schnell entladen wird, dass sie in sechs Minuten leer ist (10 C), können noch zwei Drittel der Nennkapazität entnommen werden.

Figur 5 zeigt die in Figur 4 dargestellten Ergebnisse zusammengefasst als Abhängigkeit der Entladekapazität Q_{D} von der Entladerate C (Kurve A). Die Kurve B zeigt Werte aus der Publikation
(12) W. Porcher et al., "Design of Aqueous Processed Thick LiFePO₄ Composite Electrodes for High-Energy Lithium Battery, J. Electrochem. Soc., 2009, A133 - A144

Diese Publikation beschreibt für organische Lithium-Ionen-Zellen die Herstellung verhältnismäßig dicker Elektroden, wobei bereits eine Dicke von 0,2 mm als (im Vergleich zu dem bisher Gebräuchlichen) dick angesehen wird. Sie werden mit einem wasserlöslichen Binder in wässriger Suspension hergestellt. Die dabei erreichte flächenspezifische Kapazität ("capacity density") wird mit 3 mAh/cm² bei einer Beladung von 20 mg/cm² und einer Elektrodendicke von 200 µm angegeben. Die in Figur 5 eingetragenen Messdaten wurden aus Figur 1 auf Seite A135 der Publikation für deren bestes Material ("CMC") ausgelesen. Man erkennt, dass die Kapazität sehr viel schneller als bei der erfindungsgemäßen Elektrode mit der Entladerate abnimmt. Beispielsweise für eine Entladerate von 10 C hat die in der Publikation für eine organische Lithium-Ionen-Zelle beschriebene positive Elektrode eine Entladekapazität von 18 mAh/g im Vergleich zu 100 mAh/g bei der vorliegenden Erfindung. Der Vergleich wird durch die nachfolgende Tabelle 1 zusammengefasst:

**Tabelle 1:**

| | Erfindung | Porcher et al. |
|---|---|---|
| Flächenkapazität [mAh/cm²] | 13 | 3 |
| Beladung mit aktiver Masse [mg/cm²] | 76 | 20 |
| Elektrodendicke [µm] | 500 | 200 |
| Spezifische Entladekapazität bei 10C [mAh\|g] | 100 | 18 |

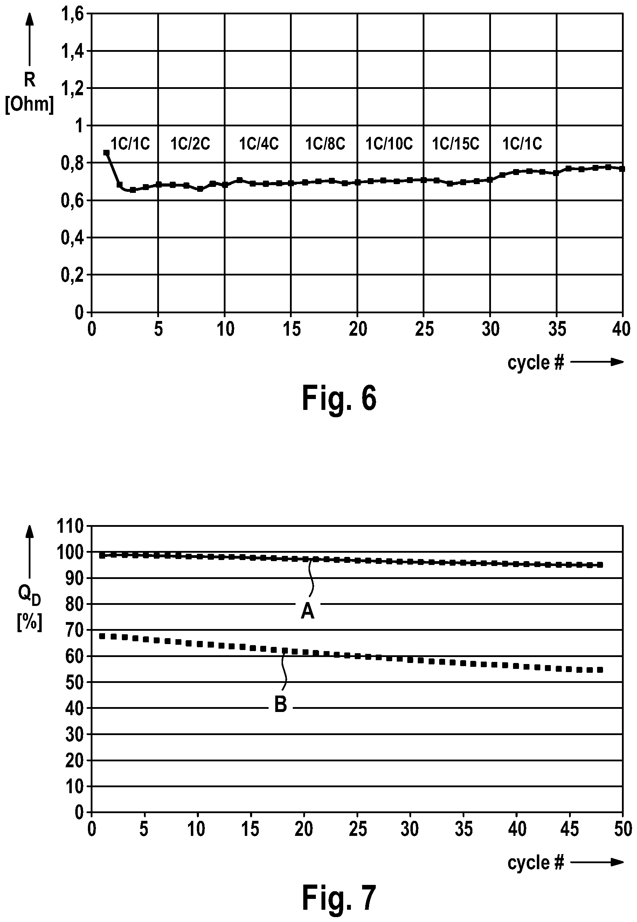

In Figur 6 sind die Werte des Widerstands R der Elektrode in Abhängigkeit von der Zyklus-Nummer dargestellt, die an den E-Zellen nach dem Laden gemessen wurden. Trotz der sehr hohen Entladeraten bleibt der Widerstand der Elektrode weitgehend stabil und liegt im Bereich von 0,6 bis 0,8 Ohm.

### Experiment 2:

Für dieses Experiment wurde eine Wickelzelle des Typs SubC hergestellt, deren Elektroden eine Kapazität von 17 mAh/cm² (positive Elektrode mit LEP-Masse wie bei Experiment 1).

Die Elektroden wurden zusammen mit einem dazwischen angeordneten Separator zu einem Wickel aufgerollt und in das SubC-Gehäuse eingebracht. Danach wurde mit einer Elektrolytlösung der Zusammensetzung LiAlCl₄·6SO₂ befüllt.

Die Zelle wurde mit einer Laderate von 0,7 C mit 831 mAh aufgeladen. Der Entladestrom betrug 10 A, was einer Entladerate von 7 C entspricht. Die Entladung wurde bei einer Zellspannung von 2 Volt und einer entnommenen Kapazität von 728 mAh abgebrochen. Dies entspricht 88 % der eingeladenen Kapazität. Die Hochstrombelastbarkeit konnte damit belegt werden.

### Experiment 3:

Mit einer erfindungsgemäßen positiven Elektrode und einer in den übrigen Merkmalen übereinstimmenden positiven Elektrode, die als aktives Material Lithiumkobaltoxid enthielt, wurde die Abhängigkeit der Kapazität von der Anzahl der Lade- und Entladezyklen (jeweils mit 1 C) in einer E-Zelle bestimmt.

Figur 7 zeigt die dabei resultierenden Ergebnisse unter Verwendung eines SO₂-Elektrolyten, der 1,5 Mol SO₂ je Mol Leitsalz (Lithiumtetrachloroaluminat) enthielt. Aufgetragen ist die Entladekapazität Q_{D} in Prozent des theoretischen Wertes über die Anzahl der durchgeführten Lade- und Entladezyklen, wobei die Kurve A die LEP-Elektrode und die Kurve B die Lithiumkobaltoxid-Elektrode betrifft. Man erkennt, dass mit der LEP-Elektrode nahezu die gesamte theoretische Kapazität praktisch genutzt werden kann, während bei der Vergleichselektrode in der Praxis im Mittel nur etwa 60 % der theoretischen Kapazität zur Verfügung stehen. Dadurch wird die höhere theoretische Kapazität des Lithiumkobaltoxids (273 mAh/g) im Vergleich zu dem LEP (170 mAh/g) praktisch ausgeglichen.

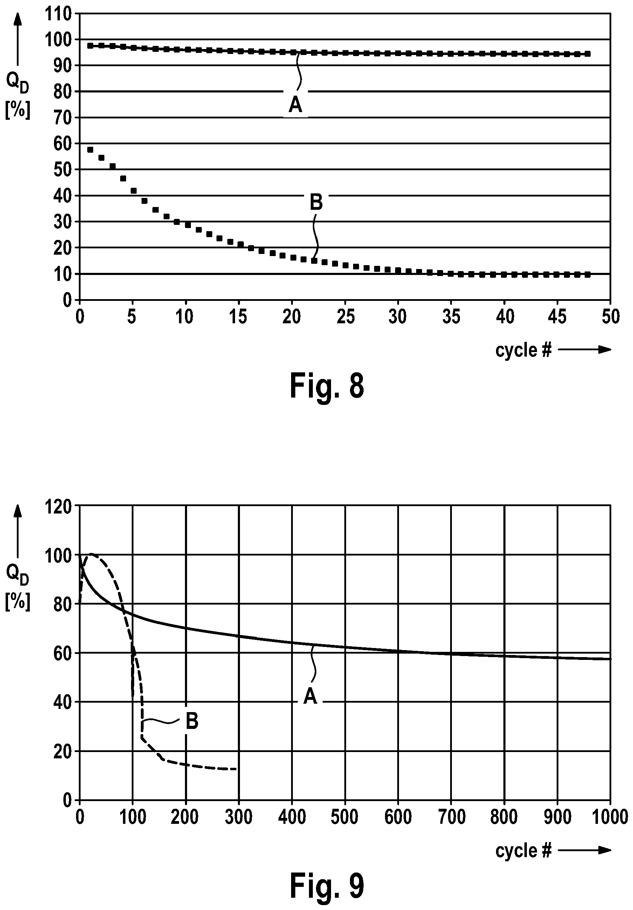

Figur 8 zeigt die Ergebnisse eines Experimentes, das sich von dem Figur 7 zugrundeliegenden Experiment nur hinsichtlich der Konzentration des Leitsalzes in dem Elektrolyten unterschied. Sie betrug in diesem Fall 4,5 Mol SO₂ je Mol LiAlCl₄. Man erkennt, dass sich die LEP-Elektrode auch in dem eine geringere Leitsalzkonzentration enthaltenden Elektrolyt sehr gut verhält (Kurve A), während für die Lithiumkobaltoxid-Elektrode die Kapazität rasch auf inakzeptabel niedrige Werte fällt (Kurve B).

### Experiment 4:

Figur 9 zeigt die Ergebnisse eines Versuches, bei dem die Funktion einer vollständigen Zelle mit einer negativen Kohlenstoffelektrode, einem SO₂-Elektrolyt und einer erfindungsgemäßen positiven Elektrode mit einer Kapazität von 19 mAh/cm² (Kurve A) mit einer in den übrigen Werten übereinstimmenden Zelle, jedoch einer positiven Elektrode auf Basis von Lithiumkobaltoxid (Kurve B), verglichen wurde. In diesem Fall enthielt der Elektrolyt 6 Mol SO₂ je Mol LiAlCl₄.

Aufgetragen ist die Entladekapazität Q_{D} in Prozent des Nennwertes in Abhängigkeit von der Zykelzahl. Nach einer anfänglichen Abnahme ist die entnehmbare Kapazität bei der erfindungsgemäßen Zelle nahezu konstant, während sie bei der Vergleichszelle rasch auf inakzeptabel niedrige Werte abnimmt. Dies bestätigt die Überlegenheit der erfindungsgemäßen Zelle, insbesondere in Verbindung mit einem Elektrolyten, der einen relativ hohen Anteil an SO₂ enthält.

Insgesamt wurde im Rahmen der Erfindung festgestellt, dass es vorteilhaft ist, einen Elektrolyt mit einem relativ geringen Gehalt an Leitsalz, bezogen auf die Menge des SO₂, einzusetzen. Dies steht im Gegensatz zu der in den bisherigen Publikationen über Lithium-SO₂-Zellen überwiegend enthaltenen Empfehlungen, insbesondere im Hinblick auf den Dampfdruck einen Elektrolyten mit einem relativ geringen SO₂-Anteil einzusetzen.

Alternativ oder zusätzlich zu dem hohen SO₂-Anteil kann die Kapazitätsstabilität der Erfindung dadurch verbessert werden, dass sie ein Lithiumhalogenid, bevorzugt ein Lithiumchlorid, enthält, wobei dieses Salz gemäß einer weiter bevorzugten Ausführungsform insbesondere als Zumischung in der aktiven Masse der positiven Elektrode enthalten ist.

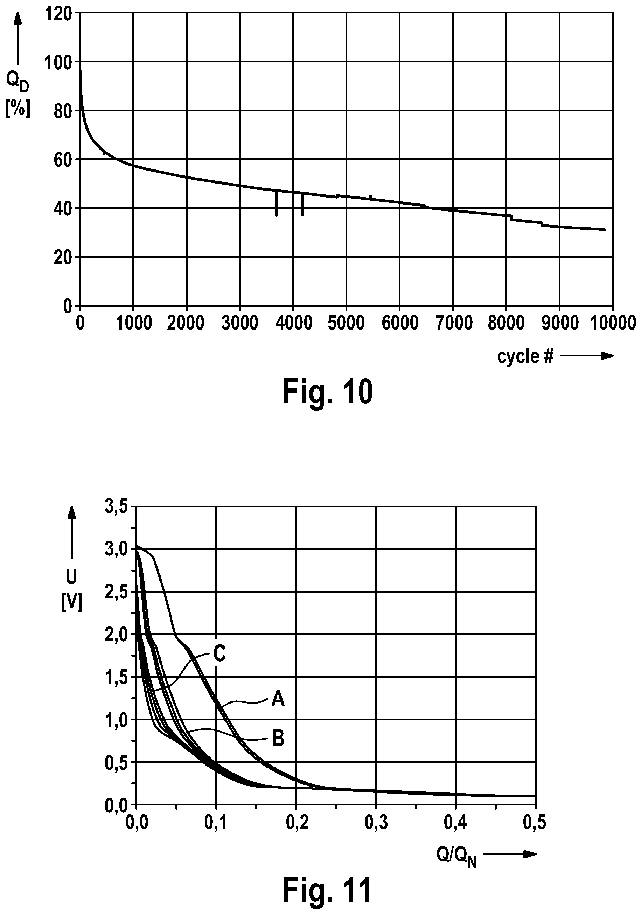

Figur 10 zeigt die Ergebnisse eines Langzeitversuches mit einer Zelle wie bei Figur 9, Kurve A, wobei wiederum die entnommene Kapazität Q_{D} in Abhängigkeit von der Zykelzahl aufgetragen wurde. Die Darstellung zeigt ca. 9700 Zyklen, wobei die Abnahme der entnehmbaren Kapazität je 100 Zyklen mit weniger als 0,4 % außerordentlich gering ist.

### Deckschichtvermindernde Vorbehandlung:

Wie oben dargelegt, lässt sich eine Verbesserung der Kapazitätstabilität von Lithium-SO₂-Zellen mit mindestens einer Insertionselektrode, insbesondere Interkalationselektrode, durch eine deckschichtvermindernde Vorbehandlung der mindestens einen Insertionselektrode erreichen. Hierzu gibt es verschiedene Möglichkeiten.

Eine erste Möglichkeit besteht darin, die Insertionselektrode einer Temperaturbehandlung zu unterziehen. Insbesondere gilt dies für Kohlenstoff-Elektroden, welche bei einer Temperatur von mindestens 900°C unter Sauerstoffausschluss (vorzugsweise unter Schutzgas) für längere Zeit (mindestens 10, vorzugsweise mindestens 20 und besonders bevorzugt mindestens 40 Stunden) getempert werden.

Alternativ oder zusätzlich kann die Deckschichtbildung auf einer negativen Kohlenstoff-Elektrode dadurch reduziert werden, dass man ein Graphitmaterial mit relativ geringer spezifischer Oberfläche verwendet.

Gemäß einer weiteren bevorzugten Ausführungsform wird die deckschichtvermindernde Vorbehandlung dadurch realisiert, dass die entsprechende Elektrode mit einer dünnen Oberflächenbeschichtung versehen wird.

Eine solche Oberflächenbeschichtung lässt sich insbesondere mittels Atomic Layer Deposition realisieren. Dieses Verfahren wird in jüngerer Zeit für zahlreiche Zwecke angewendet. Einen Überblick gibt beispielsweise die Publikation
(13) S. M. George "Atomic Layer Deposition: An Oberview", Chem. Rev. 2010, 111-131

Dabei müssen die Prozessparameter an die Erfordernisse der Elektrode angepasst werden. Im Rahmen der Erfindung wurde festgestellt, dass besondere Vorteile erreicht werden, wenn man die Kohlenstoff-Elektrode mittels NO₂-TMA (Stickoxid-Trimethylaluminium) vorbehandelt. Dadurch wird auf den Kohlenstoff eine erste funktionale Schicht aufgepflanzt, die für die anschließende ALD-Behandlung vorteilhaft ist. Hierzu kann ergänzend verwiesen werden auf
(14) G. M. Sundaram et al. "Leading Edge Atomic Layer Deposition Applications", ECS Transactions, 2008, 19-27

Vorzugsweise wird mittels ALD eine dünne Schicht aus Al₂O₃ aufgebracht. Nach dem gegenwärtigen Kenntnisstand ist auch das Aufbringen von SiO₂ möglich.

Eine weitere Möglichkeit, eine zur Deckschichtverminderung geeignete Oberflächenbeschichtung aufzubringen, ist das Dip-Coating. Dazu wird entweder das zur Verarbeitung in der Elektrode vorgesehene Insertions-Aktivmaterial oder die gesamte Elektrode mit einer Reaktionslösung in Kontakt gebracht, welche Ausgangsstoffe zur Bildung einer geeigneten Schicht enthält. Anschließend wird eine Temperaturbehandlung zur Ausbildung und Verfestigung der Schicht durchgeführt. Beispielsweise kann folgendermaßen verfahren werden:
Isopropanol, Wasser, 1-molare Salzsäure und Tetraethylorthosilikat werden im Molverhältnis 3:1:1:1 gemischt. Die Lösung wird bei Raumtemperatur gehalten. Danach wird mit Isopropanol im Volumenverhältnis 1:1 verdünnt. Die zu behandelnden Elektroden werden für 30 Sekunden oder, falls eine Blasenbildung beobachtet wird, bis zu deren Abklingen in die Reaktionslösung getaucht. Danach werden sie für 48 Stunden im Trockenschrank bei 200°C ohne Vakuum getrocknet.

Figur 11 zeigt die Ergebnisse eines Experiments mit folgenden Elektrodenmaterialien:
A negative Elektrode ohne deckschichtvermindernde Vorbehandlung
B negative Elektrode, bei der das aktive Material vor dem Einbringen in die Elektrode mittels Dip-Coating unter Bildung einer SiO₂-Schicht vorbehandelt war
C negative Elektrode, die insgesamt mittels Dip-Coating unter Bildung einer SiO₂-Schicht vorbehandelt war.

Die drei Experimentalelektroden wurden mittels einer E-Zelle untersucht, wobei beim Laden der Elektrode der Verlauf der Spannung U in Volt gegen Lithium aufgetragen wurde über den Ladezustand Q bezogen auf die Nennkapazität Q_{N}. Die drei dargestellten Kurvengruppen zeigen die Ergebnisse jeweils mehrerer Experimente mit den vorstehend beschriebenen Elektroden. In Figur 11 entspricht die Fläche unter der Kurve der durch Deckschichtbildung verlorengegangenen Zellkapazität. Man erkennt, dass der Kapazitätsverlust bei beiden vorbehandelten Elektroden wesentlich geringer als bei der unbehandelten Elektrode ist, wobei unter den beiden vorbehandelten Elektroden die in ihrer Gesamtheit vorbehandelte Elektrode etwas besser ist.

## Patentansprüche

1. Wiederaufladbare Lithium-Batteriezelle mit einem Gehäuse, einer positiven Elektrode, einer negativen Elektrode und einem Elektrolyten, der ein Leitsalz enthält,
wobei
der Elektrolyt auf SO₂ basiert,
die positive Elektrode ein Ableitelement mit einer dreidimensionalen porösen Metallstruktur aufweist, und
die positive Elektrode LiFePO₄ als aktives Material enthält.

2. Batteriezelle nach einem der vorhergehenden Ansprüche, **dadurch gekennzeichnet, dass** die positive Elektrode mindestens 0,25 mm, bevorzugt mindestens 0,3 mm, weiter bevorzugt mindestens 0,4 mm, weiter bevorzugt mindestens 0,5 mm und besonders bevorzugt mindestens 0,6 mm dick ist.

3. Batteriezelle nach einem der vorhergehenden Ansprüche, **dadurch gekennzeichnet, dass** die positive Elektrode, bezogen auf ihre Fläche, mindestens 30 mg/cm², bevorzugt mindestens 40 mg/cm², weiter bevorzugt mindestens 60 mg/cm², weiter bevorzugt mindestens 80 mg/cm², weiter bevorzugt mindestens 100 mg/cm², weiter bevorzugt mindestens 120 mg/cm² und besonders bevorzugt mindestens 140 mg/cm² aktives Material enthält.

4. Batteriezelle nach einem der vorhergehenden Ansprüche, **dadurch gekennzeichnet, dass** die positive Elektrode porös ist, wobei die Porosität der positiven Elektrode bevorzugt höchstens 50 %, weiter bevorzugt höchstens 45 %, weiter bevorzugt höchstens 40 %, weiter bevorzugt höchstens 35 %, weiter bevorzugt höchstens 30 %, weiter bevorzugt höchstens 25 % und besonders bevorzugt höchstens 20 % beträgt.

5. Batteriezelle nach einem der vorhergehenden Ansprüche, **dadurch gekennzeichnet, dass** die dreidimensionale poröse Metallstruktur als Metallschaum geformt ist.

6. Batteriezelle nach Anspruch 1, **dadurch gekennzeichnet, dass** sich die poröse Metallstruktur im Wesentlichen über die gesamte Dicke der positiven Elektrode erstreckt.

7. Batteriezelle nach einem der Ansprüche 1 bis 6, **dadurch gekennzeichnet, dass** das aktive Material in der positiven Metallstruktur im Wesentlichen homogen verteilt ist.

8. Batteriezelle nach einem der vorhergehenden Ansprüche, **dadurch gekennzeichnet, dass** die negative Elektrode mindestens 0,2 mm, bevorzugt mindest 0,3 mm, weiter bevorzugt mindestens 0,4 mm, weiter bevorzugt mindestens 0,5 mm und besonders bevorzugt mindestens 0,6 mm dick ist.

9. Batteriezelle nach einem der vorhergehenden Ansprüche, **dadurch gekennzeichnet, dass** die positive Elektrode ein Bindemittel, vorzugsweise ein fluoriertes Bindemittel, insbesondere ein Polyvinylidenfluorid und/oder ein Terpolymer aus Tetrafluorethylen, Hexafluorpropylen und Vinylidenfluorid, vorzugsweise in einer Konzentration von höchstens 10 Gew%, weiter bevorzugt in einer Konzentration von höchstens 7 Gew%, weiter bevorzugt in einer Konzentration von höchstens 5 Gew% und besonders bevorzugt in einer Konzentration von höchstens 2 Gew% enthält.

10. Batteriezelle nach einem der vorhergehenden Ansprüche, **dadurch gekennzeichnet, dass** die negative Elektrode Kohlenstoff zur Aufnahme von Lithiumionen enthält.

11. Batteriezelle nach einem der vorhergehenden Ansprüche, **dadurch gekennzeichnet, dass** die Menge des aktiven Materials der negativen Elektrode, bezogen auf ihre Fläche, mindestens 10 mg/cm², bevorzugt mindestens 20 mg/cm², weiter bevorzugt mindestens 40 mg/cm², weiter bevorzugt mindestens 60 mg/cm², weiter bevorzugt mindestens 80 mg/cm² und besonders bevorzugt mindestens 100 mg/cm² beträgt.

12. Batteriezelle nach einem der vorhergehenden Ansprüche, **dadurch gekennzeichnet, dass** die negative Elektrode porös ist und ihre Porosität bevorzugt höchstens 50 %, weiter bevorzugt höchstens 45 %, weiter bevorzugt höchstens 40 %, weiter bevorzugt höchstens 35 % und besonders bevorzugt höchstens 30 % beträgt.

13. Batteriezelle nach einem der vorhergehenden Ansprüche, **dadurch gekennzeichnet, dass** die negative Elektrode ein Bindemittel, vorzugsweise ein fluoriertes Bindemittel, insbesondere ein Polyvinylidenfluorid und/oder ein Terpolymer aus Tetrafluorethylen, Hexafluorpropylen und Vinylidenfluorid, vorzugsweise in einer Konzentration von höchstens 5 Gew%, weiter bevorzugt höchstens 3 Gew% und besonders bevorzugt höchstens 1 Gew% enthält.

14. Batteriezelle nach einem der vorhergehenden Ansprüche, **dadurch gekennzeichnet, dass** der Elektrolyt mindestens 2 Mol SO₂, bevorzugt mindestens 2,5 Mol SO₂, weiter bevorzugt mindestens 3 Mol SO₂ und besonders bevorzugt mindestens 4 Mol SO₂ je Mol Leitsalz enthält.

15. Batteriezelle nach einem der vorhergehenden Ansprüche, **dadurch gekennzeichnet, dass** der Elektrolyt als Leitsalz ein Halogenid, Oxalat, Borat, Phosphat, Arsenat oder Gallat, vorzugsweise ein Lithiumtetrahalogenoaluminat, besonders bevorzugt ein Lithiumtetrachloroaluminat enthält.

16. Batteriezelle nach einem der vorhergehenden Ansprüche, **dadurch gekennzeichnet, dass** die Zelle eine Strombelastbarkeit, bezogen auf die Fläche der positiven Elektrode, von mindestens 10 mA/cm², bevorzugt mindestens 50 mA/cm² und besonders bevorzugt mindestens 150 mA/cm² hat.

17. Batteriezelle nach einem der vorhergehenden Ansprüche, **dadurch gekennzeichnet, dass** sie ein Lithiumhalogenid, bevorzugt Lithiumchlorid, vorzugsweise gemischt mit dem aktiven Metall der positiven Elektrode enthält.

18. Batteriezelle nach einem der vorhergehenden Ansprüche, **dadurch gekennzeichnet, dass** mindestens eine der Elektroden eine zur Aufnahme von Lithiumionen geeignete Insertionselektrode ist, deren aktives Material deckschichtvermindernd vorbehandelt ist.

19. Batteriezelle nach Anspruch 18, **dadurch gekennzeichnet, dass** die mindestens eine Elektrode durch eine Oberflächenbeschichtung des aktiven Materials der Elektrode deckschichtvermindernd vorbehandelt ist, wobei die Oberflächenbeschichtung vorzugsweise aufgebracht wird durch
Atomic Layer Deposition (ALD), wobei die Oberflächenbeschichtung vorzugsweise Al₂O₃ oder SiO₂ enthält, oder
Dip-Coating, wobei die Oberflächenbeschichtung vorzugsweise SiO₂ enthält.

20. Batteriezelle nach einem der vorhergehenden Ansprüche, **dadurch gekennzeichnet, dass** sie eine Elektrode enthält, die mit folgenden Verfahrensschritten hergestellt ist:
- Herstellen einer pastösen Masse aus dem LiFePO₄ unter optionaler Zugabe eines Bindemittels und/oder eines Leitfähigkeitsverbesserers;
- homogenes Einbringen der pastösen Masse in eine dreidimensionale poröse Metallstruktur;
- Pressen der die pastöse Masse enthaltenden dreidimensionalen Metallstruktur dergestalt, dass ihre Dicke, vorzugsweise um mindestens 20 %, reduziert wird.

## Claims

1. Rechargeable lithium battery cell having a housing, a positive electrode, a negative electrode and an electrolyte containing a conductive salt,
wherein
the electrolyte is based on SO₂,
the positive electrode has a current collector element with a three-dimensional porous metal structure, and
the positive electrode contains LiFePO₄ as an active material.

2. Battery cell according to any one of the preceding claims, **characterized in that** the positive electrode has a thickness of at least 0.25 mm, preferably at least 0.3 mm, further preferably at least 0.4 mm, further preferably at least 0.5 mm and particularly preferably at least 0.6 mm.

3. Battery cell according to any one of the preceding claims, **characterized in that** the positive electrode contains a quantity of active material per unit area of at least 30 mg/cm², preferably at least 40 mg/cm², further preferably at least 60 mg/cm², further preferably at least 80 mg/cm², further preferably at least 100 mg/cm², further preferably at least 120 mg/cm² and particularly preferably at least 140 mg/cm².

4. Battery cell according to any one of the preceding claims, **characterized in that** the positive electrode is porous, the porosity of the positive electrode being preferably no more than 50 %, further preferably no more than 45 %, further preferably no more than 40 %, further preferably no more than 35 %, further preferably no more than 30 %, further preferably no more than 25 % and particularly preferably no more than 20 %.

5. Battery cell according to any one of the preceding claims, **characterized in that** the three-dimensional porous metal structure is in the form of a metal foam.

6. Battery cell according to claim 1, **characterized in that** the porous metal structure extends essentially over the entire thickness of the positive electrode.

7. Battery cell according to any one of claims 1 to 6, **characterized in that** the active metal is distributed essentially homogeneously in the positive metal structure.

8. Battery cell according to any one of the preceding claims, **characterized in that** the negative electrode has a thickness of at least 0.2 mm, preferably at least 0.3 mm, further preferably at least 0.4 mm, further preferably at least 0.5 mm and particularly preferably at least 0.6 mm.

9. Battery cell according to any one of the preceding claims, **characterized in that** the positive electrode contains a binding agent, preferably a fluorinated binding agent, most preferably a polyvinylidene fluoride and/or a terpolymer of tetrafluoroethylene, hexafluoropropylene and vinylidene fluoride, wherein the concentration of the binding agent is preferably no more than 10wt.%, further preferably no more than 7 wt.%, further preferably no more than 5 wt.% and particularly preferably no more than 2 wt.%.

10. Battery cell according to any one of the preceding claims, **characterized in that** the negative electrode contains carbon for inserting lithium ions.

11. Battery cell according to any one of the preceding claims, **characterized in that** the quantity of the active material of the negative electrode per unit area is at least 10 mg/cm², preferably at least 20 mg/cm², further preferably at least 40 mg/cm², further preferably at least 60 mg/cm², further preferably at least 80 mg/cm² and particularly preferably at least 100 mg/cm².

12. Battery cell according to any one of the preceding claims, **characterized in that** the negative electrode is porous and its porosity is preferably no more than 50 %, further preferably no more than 45 %, further preferably no more than 40 %, further preferably no more than 35 % and particularly preferably no more than 30 %.

13. Battery cell according to any one of the preceding claims, **characterized in that** the negative electrode contains a binding agent, preferably a fluorinated binding agent, most preferably a polyvinylidene fluoride and/or a terpolymer of tetrafluoroethylene, hexafluoropropylene and vinylidene fluoride, wherein the concentration of the binding agent is preferably no more than 5 wt.%, further preferably no more than 3 wt.% and particularly preferably no more than 1 wt.%.

14. Battery cell according to any one of the preceding claims, **characterized in that** the electrolyte contains at least 2 mol SO₂, preferably at least 2.5 mol SO₂, further preferably at least 3 mol SO₂ and particularly preferably at least 4 mol SO₂ per mole of conductive salt.

15. Battery cell according to any one of the preceding claims, **characterized in that** the electrolyte contains as conductive salt a halogenide, oxalate, borate, phosphate, arsenate or gallate, preferably a lithium tetrahalogenoaluminate, particularly preferably a lithium tetrachloroaluminate.

16. Battery cell according to any one of the preceding claims, **characterized in that** the cell has a current carrying capacity per unit area of the positive electrode, of at least 10 mA/cm², preferably at least 50 mA/cm² and particularly preferably at least 150 mA/cm².

17. Battery cell according to any one of the preceding claims, **characterized in that** it contains a lithium halogenide, preferably lithium chloride, preferably mixed with the active metal of the positive electrode.

18. Battery cell according to any one of the preceding claims, **characterized in that** at least one of the electrodes is an insertion electrode suitable for inserting lithium ions and pretreated to reduce covering layers.

19. Battery cell according to claim 18, **characterized in that** at least one electrode is pretreated to reduce covering layers by means of a surface coating of the active material, said surface coating preferably being applied by
atomic layer deposition (ALD), the surface coating preferably containing Al₂O₃ or SiO₂, or
dip coating, the surface coating preferably containing SiO₂.

20. Battery cell according to any one of the preceding claims, **characterized in that** it contains an electrode being produced by the following steps:
- producing a paste mass from LiFePO₄ with optional admixture of a binding agent and/or a conductivity-improving material;
- homogeneously incorporating the paste mass into a three-dimensional porous metal structure;
- pressing the three-dimensional metal structure containing the paste mass in such a manner that its thickness is reduced, preferably by at least 20 %.

## Revendications

1. Cellule de batterie au lithium rechargeable comprenant un boîtier, une électrode positive, une électrode négative et un électrolyte qui contient un sel conducteur,
dans laquelle
l'électrolyte est à base de SO₂,
l'électrode positive comprend un élément de dérivation possédant une structure métallique poreuse tridimensionnelle, et
l'électrode positive contient du LiFePO₄ en tant que matériau actif.

2. Cellule de batterie selon l'une des revendications précédentes, **caractérisée en ce que** l'électrode positive a une épaisseur d'au moins 0,25 mm, de préférence d'au moins 0,3 mm, plus préférablement d'au moins 0,4 mm, plus préférablement d'au moins 0,5 mm et de manière particulièrement préférée d'au moins 0,6 mm.

3. Cellule de batterie selon l'une des revendications précédentes, **caractérisée en ce que** l'électrode positive, rapporté à sa surface, contient au moins 30 mg/cm², de préférence au moins 40 mg/cm², plus préférablement au moins 60 mg/cm², plus préférablement au moins 80 mg/cm², plus préférablement au moins 100 mg/cm², plus préférablement au moins 120 mg/cm² et de manière particulièrement préférée au moins 140 mg/cm² de matériau actif.

4. Cellule de batterie selon l'une des revendications précédentes, **caractérisée en ce que** l'électrode positive est poreuse, dans laquelle la porosité de l'électrode positive s'élève de préférence au plus à 50 %, plus préférablement au plus à 45 %, plus préférablement au plus à 40 %, plus préférablement au plus à 35 %, plus préférablement au plus à 30 %, plus préférablement au plus à 25 % et de manière particulièrement préférée au plus à 20 %.

5. Cellule de batterie selon l'une des revendications précédentes, **caractérisée en ce que** la structure métallique poreuse tridimensionnelle est façonnée sous forme de mousse métallique.

6. Cellule de batterie selon la revendication 1, **caractérisée en ce que** la structure métallique poreuse s'étend sensiblement sur toute l'épaisseur de l'électrode positive.

7. Cellule de batterie selon l'une des revendications 1 à 6, **caractérisée en ce que** le matériau actif est réparti de manière sensiblement homogène dans la structure métallique positive.

8. Cellule de batterie selon l'une des revendications précédentes, **caractérisée en ce que** l'électrode négative a une épaisseur d'au moins 0,2 mm, de préférence d'au moins 0,3 mm, plus préférablement d'au moins 0,4 mm, plus préférablement d'au moins 0,5 mm et de manière particulièrement préférée d'au moins 0,6 mm.

9. Cellule de batterie selon l'une des revendications précédentes, **caractérisée en ce que** l'électrode positive contient un liant, de préférence un liant fluoré, en particulier un fluorure de polyvinylidène et/ou un terpolymère de tétrafluoroéthylène, d'hexafluoropropylène et de fluorure de vinylidène, de préférence dans une concentration d'au plus 10% en poids, plus préférablement dans une concentration d'au plus 7 % en poids, plus préférablement dans une concentration d'au plus 5 % en poids et de manière particulièrement préférée dans une concentration d'au plus 2 % en poids.

10. Cellule de batterie selon l'une des revendications précédentes, **caractérisée en ce que** l'électrode négative contient du carbone pour l'absorption d'ions lithium.

11. Cellule de batterie selon l'une des revendications précédentes, **caractérisée en ce que** la quantité du matériau actif de l'électrode négative, rapporté à sa surface, s'élève au moins à 10 mg/cm², de préférence au moins à 20 mg/cm², plus préférablement au moins à 40 mg/cm², plus préférablement au moins à 60 mg/cm², plus préférablement au moins à 80 mg/cm² et de manière particulièrement préférée au moins à 100 mg/cm².

12. Cellule de batterie selon l'une des revendications précédentes, **caractérisée en ce que** l'électrode négative est poreuse et que sa porosité s'élève de préférence au plus à 50 %, plus préférablement au plus à 45 %, plus préférablement au plus à 40 %, plus préférablement au plus à 35 % et de manière particulièrement préférée au plus à 30 %.

13. Cellule de batterie selon l'une des revendications précédentes, **caractérisée en ce que** l'électrode négative contient un liant, de préférence un liant fluoré, en particulier un fluorure de polyvinylidène et/ou un terpolymère de tétrafluoroéthylène, d'hexafluoropropylène et de fluorure de vinylidène, de préférence dans une concentration d'au plus 5 % en poids, plus préférablement d'au plus 3 % en poids et de manière particulièrement préférée d'au plus 1 % en poids.

14. Cellule de batterie selon l'une des revendications précédentes, **caractérisée en ce que** l'électrolyte contient au moins 2 moles de SO₂, de préférence au moins 2,5 moles de SO₂, plus préférablement au moins 3 moles de SO₂ et de manière particulièrement préférée au moins 4 moles de SO₂ par mole de sel conducteur.

15. Cellule de batterie selon l'une des revendications précédentes, **caractérisée en ce que** l'électrolyte contient en tant que sel conducteur un halogénure, un oxalate, un borate, un phosphate, un arséniate ou un gallate, de préférence un tétrahalogénoaluminate de lithium, de manière particulièrement préférée un tétrachloroaluminate de lithium.

16. Cellule de batterie selon l'une des revendications précédentes, **caractérisée en ce que** la cellule a une capacité de transport de courant, rapportée à la surface de l'électrode positive, d'au moins 10 mA/cm², de préférence d'au moins 50 mA/cm², et de manière particulièrement préférée d'au moins 150 mA/cm².

17. Cellule de batterie selon l'une des revendications précédentes, **caractérisée en ce qu'**elle contient un halogénure de lithium, de préférence du chlorure de lithium, de préférence mélangé avec le métal actif de l'électrode positive.

18. Cellule de batterie selon l'une des revendications précédentes, **caractérisée en ce qu'**au moins l'une des électrodes est une électrode d'insertion appropriée à l'absorption d'ions lithium, dont le matériau actif est prétraité en diminuant la couche de couverture.

19. Cellule de batterie selon la revendication 18, **caractérisée en ce que** l'au moins une électrode est prétraitée en diminuant la couche de couverture au moyen d'un revêtement de surface du matériau actif de l'électrode, dans laquelle le revêtement de surface est de préférence appliqué par Atomic Layer Deposition (ALD), le revêtement de surface contenant de préférence de l'Al₂O₃ ou du SiO₂, ou
Dip-Coating, le revêtement de surface contenant de préférence du SiO₂.

20. Cellule de batterie selon l'une des revendications précédentes, **caractérisée en ce qu'**elle contient une électrode qui est produite à l'aide des étapes de procédé suivantes :
- production d'une substance pâteuse à partir du LiFePO₄ avec ajout facultatif d'un liant et/ou d'un agent d'amélioration de la conductivité ;
- introduction homogène de la substance pâteuse dans une structure métallique poreuse tridimensionnelle ;
- compression de la structure métallique tridimensionnelle contenant la substance pâteuse de telle sorte que son épaisseur soit réduite, de préférence d'au moins 20 %.
